**Europäisches Patentamt**

**European Patent Office**

**Office européen des brevets**

(19)

(11) Veröffentlichungsnummer : **0 400 437 B1**

(12)

# EUROPÄISCHE PATENTSCHRIFT

(45) Veröffentlichungstag der Patentschrift :
**21.07.93 Patentblatt 93/29**

(51) Int. Cl.$^5$ : **C08L 95/00**

(21) Anmeldenummer : **90109562.0**

(22) Anmeldetag : **19.05.90**

(54) **Verbesserte elastische Rückstellung aufweisendes polymermodifiziertes Bitumen.**

(30) Priorität : **04.08.89 DE 3925827**
**01.06.89 DE 3917816**

(43) Veröffentlichungstag der Anmeldung :
**05.12.90 Patentblatt 90/49**

(45) Bekanntmachung des Hinweises auf die
Patenterteilung :
**21.07.93 Patentblatt 93/29**

(84) Benannte Vertragsstaaten :
**AT BE DE DK FR GB IT NL SE**

(56) Entgegenhaltungen :
**WO-A-87/06947**
**DE-A- 2 509 473**
**GB-A- 1 177 425**

(73) Patentinhaber : **RÖHM GMBH**
**Kirschenallee**
**W-6100 Darmstadt (DE)**

(72) Erfinder : **Lehmann, Klaus-Dieter**
**Am Stremel 8**
**W-2111 Heidenau (DE)**
Erfinder : **Müller, Michael, Dr.**
**Pater-Delp-Strasse 32**
**W-6140 Bensheim 3 (DE)**

**Beschreibung**

Gebiet der Erfindung

Die Erfindung betrifft Polymere auf Polyalkyl(meth)acrylat-Basis als Bitumenverbesserungsmittel und mit solchen Polymeren modifizierte Bitumina mit verbesserten technischen Eigenschaften.

Stand der Technik

Bitumen, das ein Gemisch von im wesentlichen verschiedenen Kohlenwasserstoffen, mit schwankenden Anteilen an paraffinischen, naphthenischen und aromatischen Kohlenwasserstoffen, ist, wird auf Grund seiner Eigenschaften vielfältig verwendet, so für die Herstellung von Straßenbelägen, als Vergußmassen, im Bautenschutz als Anstrichstoffe oder in Form von Dachpappen sowie als Abdichtungsmittel gegen Grundwasser.

Infolge der spezifischen Produkteigenschaften - Bitumina besitzen in Abhängigkeit von der Rohölprovenienz nur geringe bis gar keine elastischen Eigenschaftenverspröden damit hergestellte Beläge bei niedrigen Temperaturen und erweichen bei höheren Temperaturen.

Durch Zusatz verschiedener Additive, insbesondere von Polymeren, wird versucht, eine Vergütung der Bitumina, insbesondere eine Verbesserung der rheologischen Eigenschaften zu erreichen, die z.B. dem Asphalt, einem Bitumen-Mineralstoff-Gemisch, vornehmlich für den Straßenbau, eine ausreichende Stabilität und Kälteflexibilität sowie eine hohe Dauerfestigkeit bei ständig steigenden Verkehrsbelastungen geben sollen. So kann der Polymerzusatz die sogenannte Plastizitätsspanne vergrößern, d.i. die Differenz zwischen Erweichungspunkt und Brechpunkt. Eine Absenkung des Brechpunktes (DIN 52 012) und eine Erhöhung der Duktilität (DIN 52 013) durch Polymerzusatz zeigen bessere Kälteflexibilität an. Der Zweck der Polymeren als Bitumenaddive ist die Veränderung des elastoviskosen Verhaltens von Bitumen, das heißt die Erweiterung seiner Plastizitätsspanne und Verbesserung der elastischen Rückstellung.

Neben Natur- und Synthesekautschuken wurden als Polymere, Duroplastharze und Thermoplaste als Bitumenverbesserer geprüft (Körner et al., Plaste und Kautschuk 24 (1977, 475 bis 478). Als Polymer-Bitumenzusätze werden derzeit vor allem Styrol/Butadien (SB)-, EPDM- und Ethylen/Vinylacetat (EVA)-Copolymere und insbesondere für Industriebitumen, auch ataktisches Polypropylen technisch verwendet. Marktgängige polymermodifizierte Bitumina sind u.a. ®Caribit (SB, Shell), ®Olexobit (EPDM, BP), ®Styrelf (SB, Elf).

Auch Polymere auf Acrylsäureester- und Methacrylsäureester-Basis, insbesondere Polymere von Alkylmethacrylsäureestern (PAMA) sind als Bitumenverbesserungsmittel beschrieben. Eine breitere technische Verwendung haben diese Polymeren, trotz guter Erfüllung einer Reihe gestellter Anforderungen als Zusätze, vor allem wegen unzureichender Verbesserung der elastischen Rückstellung gebrauchsfertiger elastomermodifizierter Bitumina, bisher nicht gefunden.

Die US-Patentschrift 2 420 082 beschreibt bituminöse Mischungen aus Bitumen und 2 bis 5 % Poly-$C_8$-$C_{10}$-alkylmethacrylaten, ohne spezifische Angaben zu deren Molekulargewichten, wodurch die Duktilität des Bitumen verbessert wird.

Auch die US-Patentschrift 2 848 429 beschreibt durch Zusatz von je 0,01 bis 0,5 % Kautschuk und Poly-$C_8$-$C_{24}$-alkyl(meth)acrylaten erhaltene bituminöse Mischungen mit verbesserter Duktilität. Die PAMA's haben Molekulargewichte von 5 000 bis 500 000.

Die deutschen Patentschriften DE-AS 12 40 773 und DE-OS 23 31 727 beschreiben ebenso mit Polymeren von Alkylmethacrylaten, ohne nähere und spezifische Angaben über diese Polymeren zu machen, verbesserte bituminöse Bindemittel für Straßendecken.

Weiter werden Polyalkyl(meth)acrylate bzw. Copolymerisate von Alkyl(meth)acrylaten als Bitumenverbesserungsmittel vorgeschlagen, in der DE-OS 25 09 473 ein festes Mischpolymerisat mit Molekulargewichten von 50 000 bis 500 000, das im wesentlichen aus Alkyl(meth)acrylaten mit Alkylgruppen, die mehr als 6 C-Atome enthalten, sowie aus 3 bis 20 Gew.-% Acrylsäure oder Methacrylsäure und aus 3 bis 20 Gew.-% basischen Stickstoff-haltigen Monomeren aufgebaut ist, in der japanischen Patent-Offenlegungsschrift 52-141 829 stufenweise emulsionspolymerisierte Zusätze und in der WO 88/07 067 Poly-$C_4$-$C_{20}$-Alkylmethacrylate mit Molekulargewichten von etwa 5 000 bis etwa 1 000 000, und die in Mengen von 0,01 bis etwa 10 Gew.-% in dem modifizierten Bitumen enthalten sind.

Voraussetzungen an die polymeren Additive für die Nutzung der Eigenschaftsverbesserungen in bituminösen Gemischen sind Oxidations- und Thermostabilität der Polymeren, ihre leichte Einarbeitbarkeit im Bitumen, die Kompatibilität mit unterschiedlichen Bitumensorten und die Stabilität der Bitumen-Polymer-Mischung.

Die bekannten polymeren Bitumenaddive verbessern in ausreichendem Maße die Kälteflexibilität in bituminösen Gemischen und in damit hergestellten Mineralabmischungen, d.h. Brechpunkt und Duktilität solcher Materialien werden durch die bekannten Polymerzusätze günstig beeinflußt.

Hohe Dauerfestigkeit und Elastizität der mit bituminösen Bindemitteln hergestellten Asphalte, welche durch die elastischen Eigenschaften der Bitumina bestimmt werden, sind, wie beispielsweise in der Praxis zum Teil stark verformte Asphalt-Straßendecken zeigen, in noch nicht genügenden bzw. guten Maßen vorhanden.

Aufgabe und Lösung

Es stellte sich daher die Aufgabe, Polymere zu finden, die bei Verwendung in Bitumenabmischungen die elastischen Eigenschaften, gemessen z.B. als elastische Rückstellung, von Bitumen-Zubereitungen deutlich verbessern, und die weiter die bekannten und erforderlichen Voraussetzungen wie hohe Thermostabilität und Oxidationsbeständigkeit, sowie gute Kälteflexibilität besitzen und gute Einarbeitbarkeit und Kompatibilität aufweisen,

Es wurde gefunden, daß Polyalkyl(meth)acrylate bestimmter Zusammensetzungen wirksame Bitumenzusätze sind, die sowohl Kälteflexibilität, wie in ganz besonderem Maße die elastischen Eigenschaften des Bitumens und damit bituminöser Zusammensetzungen verbessern.

Überraschenderweise ergab sich, daß in polymermodifiziertem Bitumen, durch Polyalkyl(meth)acrylate langkettiger Alkylester, die durch Copolymerisation mit polymerisierbaren Carbonsäuren und/oder polymerisierbaren basischen Stickstoffverbindungen, und welche beide in Mengen je von 0,1 bis 2,8 Gew.-% im Copolymerisat eingebaut bzw. in einem Copolymerisatgemisch vorhanden sind, erhalten werden, und welche Molekulargewichte Mw über 30 000 haben, hohe Elastizitäten erreicht werden.

Die Erfindung betrifft daher
Polymermodifiziertes Bitumen mit verbesserter elastischer Rückstellung durch einen Gehalt von 0,5 bis 20 Gew.-% an Polymerbestandteilen, wobei diese Polymerbestandteile mindestens zu 20 Gew.-% Polyalkyl-(meth)acrylate mit Molekulargewichten über 30 000 sind,
   dadurch gekennzeichnet,
daß das Polyalkyl(meth)acrylat in Anteilen von 50 bis 99,8 Gew.-% aus $C_8$- bis $C_{26}$-Alkyl(meth)acrylaten, in Anteilen von 0,1 bis 2,8 Gew.-% aus polymerisierbaren Carbonsäuren, in Anteilen von 0,1 bis 2,8 Gew.-% aus polymerisierbaren basischen Stickstoffverbindungen und in Anteilen von 0 bis 49,8 Gew.-% aus einer oder mehrerer anderer polymerisierbarer Verbindungen mit nicht mehr als einer polymerisierbaren Doppelbindung aufgebaut ist.

Das erfindungsgemäß zu verwendende Polyalkyl(meth)acrylat der angegebenen Zusammensetzung kann ein Copolymerisat der angegebenen Comonomeren oder ein Gemisch von Copolymerisaten aus Alkyl-(meth)acrylaten mit polymerisierbaren Carbonsäuren und/oder polymerisierbaren basischen Stickstoffverbindungen sein. Der Copolymerzusatz besteht vorteilhaft ausschließlich aus Alkyl(meth)acrylatcopolymerisaten.

Die Alkyl(meth)acrylatcopolymerisate und/oder Gemische von Copolymerisaten mit erfindungsgemäßen Zusammensetzungen können sowohl als Lösung, z.B. in einem geeigneten Mineralöl, als wäßrige Emulsion oder in reiner Form dem Bitumen oder bituminösen Gemischen zugesetzt werden.

Zwar läßt sich wie aus dem Stand der Technik bekannt, durch Zusatz von Polyalkyl(meth)acrylaten, welche Molekulargewichte im Bereich von etwa 50 000 bis etwa 1 000 000 haben, in polymermodifizierten Bitumina die Kälteflexibilität, was in den Kenndaten von Brechpunkt und Duktilität zum Ausdruck gebracht wird, verbessern, in nicht ausreichendem Maße jedoch die elastische Rückstellung, wodurch bleibende Verformungen z.B. in Straßenbelägen hingenommen werden müssen, die ihrerseits hohe verkehrssicherheitstechnische Risiken in sich bergen.

Beispielsweise stellt die Spezifikation der technischen Lieferbedingungen für gebrauchsfertige polymermodifizierte Bitumen, T1 PmB 88, Teil 1, Fassung vom 30.12.1988, bei verschiedenen PmB-Sorten Anforderungen an die elastische Rückstellung von mindestens 50 %.

Zum Nachweis der elastischen Eigenschaften gebrauchsfertiger elastomermodifizierter Bitumen wird die Prüfung der elastischen Rückstellung nach dem Halbfadenverfahren im Duktilometer wie folgt in Anlehnung an DIN 52013 bei 25 Grad C durchgeführt.

Abweichend von DIN 52013 werden die Probekörper nur bis zu einer Fadenlänge von 20 cm ausgezogen und der Faden nach Arretierung des Vorschubs innerhalb 10 s mit einer Schere in Fadenmitte in zwei Halbfäden getrennt. Die elastische Rückstellung ist definiert als der Abstand, der sich nach 30 min zwischen den beiden Halbfädenenden einstellt. Sie wird angegeben in %, bezogen auf die Ausgangsdehnung.

Die Beispiele mit den Vergleichsbeispielen belegen die geringe elastische Rückstellung bei Verwendung von reinen Polyalkyl(meth)acrylaten mit Molekulargewichten Mw unter 1 000 000 und die erheblich höheren Werte in den erfindungsgemäßen PmB's. (Zusammenstellung s. Tabelle 1)

Der Aufbau der erfindungsgemäßen Copolymerzusätze mit (Meth)acrylsäureestern gewahrt gute Thermostabilität, gute Oxidationsbeständigkeit und gute Löslichkeit, d.h. auch leichte Einarbeitbarkeit in fast allen Bitumensorten.

Durchführung der Erfindung

Für die Herstellung der erfindungsgemäß zu verwendenden (Meth)acrylsäurealkylestercopolymerisate werden langkettige Alkylester der Acrylsäure und/oder vor allem der Methacrylsäure mit $C_8$- bis $C_{26}$-, insbesondere mit $C_8$- bis $C_{20}$-Alkylresten, vorteilhaft mit $C_{10}$- bis $C_{18}$-Alkylresten in der Estergruppe als Monomere verwendet. Beispiele für solche Ester sind n-Octylmethacrylat, 2-Ethylhexylacrylat, 2-Ethylhexylmethacrylat, n-Decylmethacrylat, Isodecylacrylat, Isodecylmethacrylat, Dodecylmethacrylat, Octadecylacrylat, Octadecylmethacrylat, Eicosylmethacrylat, Tricosylmethacrylat, wobei die für die Esterherstellung verwendeten langkettigen Alkohole bevorzugt als synthetische Alkohole eingesetzt werden, und welche meist Gemische verschiedener Alkohle im $C_8$- bis $C_{26}$-Bereich darstellen. Solche Alkohle sind im Handel beispielsweise unter den Markennamen ®Lorol, ®Alfol, ®Dobanol, ®Behenyl-SR bekannt. Ein beispielsweise für die Herstellung von Isodecylmethacrylat brauchbarer technischer Alkohol ist ein Gemisch aus isomeren Isodecylalkoholen mit einer mittleren C-Zahl (C) = 9,9 - 10,3.

Die Bitumen-modifizierten Polyalkyl(meth)acrylate sind aus 50 bis 99,8 Gew.-%, vor allem aus 60 bis 99,5 Gew.-% und insbesondere aus 80 bis 99 Gew.-% der langkettigen $C_8$- bis $C_{26}$-Alkylester der Acrylsäure und-/oder vor allem der Methacrylsäure aufgebaut, wobei diese vorteilhaft Gemische verschiedener $C_8$- bis $C_{26}$-Alkylester sind.

Die sauren und die basischen Comonomeren sind in Mengen von 0,1 bis 2,8 Gew.-%, vor allem 0,2 bis 2,5 Gew.-%, insbesondere 0,5 bis 2,0 Gew.-% jeder dieser funktionellen Monomerart, in dem Copolymerisat bzw. den zu mischenden Copolymerisaten eingebaut. Als saure Monomere sind Acrylsäure und Methacrylsäure bevorzugt. Aber beispielsweise auch Maleinsäure sowie Crotonsäure oder Itakonsäure können als saure Comonomere ausschließlich oder mit Acrylsäure und/oder Methacrylsäure zusammen eingebaut sein.

Als basische monomere Verbindungen sind solche mit sekundären oder tertiären Amino- oder Amidogruppen oder mit basischen heterocyklischen Gruppen zu nennen. Ungesättigte Verbindungen mit primären Aminogruppen verhindern im allgemeinen die radikalische Polymerisation und sind dann ungeeignet. Dagegen sind ungesättigte Verbindungen mit sekundären Aminogruppen, z.B. tert.-Butyl-Aminoalkylester der Acryl- oder Methacrylsäure, polymerisierbar, wenn das Wasserstoffatom der Aminogruppe sterisch abgeschirmt ist. Bevorzugte Monomere mit einem basischen Stickstoffatom sind die Dialkylaminoalkylester oder die Dialkylaminoalkylamide der Acryl- oder Methacrylsäure, insbesondere solche mit insgesamt 7 bis 16 Kohlenstoffatomen und N-Alkylacrylamide oder -methacrylamide. Als Beispiele seien Dimethylaminoethylacrylat oder -methacrylat, Dimethylaminopropylacrylat oder -methacrylat, Dimethylaminobutylacrylat oder -methacrylat, N-Methylacrylamid, N-Methylmethacrylamid, Dimethylaminoethylacrylamid oder -methacrylamid und solche Ester oder Amide genannt, die anstelle einer Dimethylaminogruppe eine Diethylamino-, Dipropylamino-, Dibutylamino-, Methylethylamino-, Methylbutylamino-, Morpholino- oder Piperidinogruppe enthalten. Zu den geeigneten basischen Monomeren gehören weiterhin Vinylpyrrolidon, Vinylpyridin, Vinylimidazol, Vinylimidazolin, Vinylpyrazolon, Vinylpiperidin, sowie die Acryl- oder Methacrylsäureester von Imidazolyl-Alkanolen oder Imidazolinyl-Alkanolen.

In Anteilen von 0 bis 49,8 Gew.-%, besonders in Anteilen von 0 bis 20 Gew.-% können die Copolymerisate aus einer oder mehrerer anderer copolymerisierbarer Verbindungen mit einer Doppelbindung aufgebaut sein. Als nicht essentiell notwendige Monomere für die Herstellung des erfindungsgemäßen Copolymeren seien beispielhaft genannt Acrylsäure- und/oder Methacrylsäureester von $C_1$- bis $C_7$-Alkoholen, wie Methylmethacrylat, Isobutylmethacrylat, n-Butylacrylat, Isoamylmethacrylat, n-Hexylacrylat, weiter Acrylnitril, Acrylamid, Methacrylamid, Styrol, Vinylacetat.

Zur Einarbeitung der die elastische Rückstellung verbessernden Polymeren in die Bitumina, lassen sich dieselben als Lösung, vor allem solche in einem geeigneten Mineralöl, z.B. einem höher viskosen naphthenbasischen Schmieröl, als wäßrige Emulsion oder in reiner Form dem Bitumen zusetzen. Die Herstellung der Polyalkyl(meth)acrylate kann daher nach den üblichen Verfahren durch vornehmlich radikalische Polymerisation der Monomeren in Lösung oder in Emulsion, aber auch in Substanz vorgenommen werden (vgl. H. Rauch-Puntigam, Th.Völker, Acryl- und Methacrylverbindungen, Springer-Verlag, Berlin, 1967, insbesondere Seiten 203, 207, 230 - 233, 238, 327). Die Molekulargewichtseinstellung, die für die erfindungsgemäß zu verwendenden Polyalkyl(meth)acrylate über 3 mal $10^4$, insbesondere > 5 mal $10^4$ sein soll, wird vor allem durch die Menge des die Polymerisation auslösenden Initiators im Verhältnis zu den polymerisierbaren Monomeren oder der Mitverwendung eines Reglers, z.B. eines Alkylmercaptans bestimmt und wird nach bekannten Methoden durchgeführt. Die Molekulargewichte Mw in g/mol der erhaltenen Polymerisate sind nach der Methode der Lichtstreuung (Ullmanns Encyklopädie der techn. Chemie, 4. Auflage, Band 15, Seiten 385 bis 387) oder der weiter hinten angegebenen Eichbeziehung bestimmt und die Viskositäten nach DIN 7745 mit Chloroform als Lösungsmittel bei 20 Grad C gemessen.

Den Bitumina werden zur erfindungsgemäßen Modifizierung Polyalkyl(meth)acrylate mit sauren und basischen Gruppen im Molekül und mit Molekulargewichten von > 3 mal $10^4$ in Mengen von 1 bis 10 und insbesondere in Mengen von 2 bis 8 Gew.-% zugesetzt. Neben den erfindungsgemäß zusammengesetzten Polyalkyl(meth)acrylaten können die erfindungsgemäßen polymermodifizierten Bitumina, andere als Veredlungskomponenten für bituminöse Bindemittel und Gemische, bekannte polymere Verbindungen, wie beispielsweise Polyolefine (Polyethylen, Polypropylen) Ethylen-Vinylacetat-Copolymere oder Acrylnitril-Butadien-Styrol-Copolymere, enthalten.

Unter Bitumen werden im Sinne der vorliegenden Erfindung alle z.B. im Straßenbau oder im Dachbahnenbau als Verguß-, Dichtungs- oder Anstrichmassen gebräuchlichen Bitumen verstanden.

BEISPIELE

Die angegebenen Molekulargewichte wurden aus den $\eta_{sp}/c$-Werten mit Hilfe folgender Eichbeziehung erhalten:

$$\eta_{sp}/c \text{ (Chloroform, 20 Grad C)} = 0,0156 \; Mw^{0,645}$$

Beispiel 1

In einem 15 l-Stahlkessel mit Rührung, Rückflußkühler, Innenthermometer und Ölumlaufheizung wurden 4 900 g Isodecylmethacrylat, 50 g Methacrylsäure und 50 g Dimethylaminoethylmethacrylat vorgelegt und auf 150 Grad C erwärmt. Durch Zugabe von 150 g $CO_2$-Eis wurde entgast und durch Zugabe von 6 g t-Butylperbenzoat die Polymerisation gestartet. 3 Stunden nach Zugabe des Initiators wurde mit 2 500 g eines naphthenbasischen Schmieröls der Viskosität 8,5 $mm^2$/s bei 100 Grad C verdünnt. Anschließend wurde die Kesseltemperatur auf 100 Grad C erhöht und weitere 6 g t-Butylperbenzoat wurden zugegeben. Nach weiteren 10 Stunden wurde erneut mit 2 500 g Schmieröl auf eine Konzentration von 50 % verdünnt.

$\eta_{sp}/c$ (Chloroform, 20 Grad C) = 97 ml/g

Mw = 760 000 g/mol (nach Eichbeziehung)

Umsatz = 98,6 %

80 g der Polymerlösung wurden bei 150 Grad C zu 1 000 g Bitumen des Typs B 200 gegeben. Nach 1-stündigem Rühren im Rundkolben mit Säbelrührer bei 150 Grad C war das Polymerisat vollständig gelöst. Das erhaltene polymermodifizierte Bitumen war homogen.

Beispiel 2

In einem 4 l-Kolben mit Rührung, Innenthermometer und Rückflußkühler wurden 600 g n-Octan, 588 g Isodecylmethacrylat, 6 g Methacrylsäure und 6 g Dimethylaminoethylmethacrylat vorgelegt und mittels eines Ölbades auf 85 Grad C erwärmt. Nach dem 1 Stunde lang $N_2$ eingeleitet wurde, wurden 1,2 g t-Butylperoctoat zugegeben. Nach 3 Stunden wurden erneut 1,2 g t-Butylperoctoat zugesetzt. Nach insgesamt 10 Stunden war die Polymerisation beendet. Das Polymerisat wurde anschließend durch Eingießen der Octanlösung in Ethanol gefällt und getrocknet.

$\eta_{sp}/c$ (Chloroform, 20 Grad C) = 68 ml/g

Mw = 439 000 g/mol (nach Eichbeziehung)

Umsatz = 99,5 %

40 g des isolierten und getrockneten Polymerisats wurden bei 150 Grad C zu 1 000 g Bitumen des Typs B 80 gegeben. Nach 1-stündigem Rühren im Rundkolben mit Säbelrührer bei 150 Grad C war das Polymerisat vollständig gelöst. Das erhaltene polymermodifizierte Bitumen war homogen.

Beispiel 3

In einem 4 l-Kolben mit Rührung, Innenthermometer und Rückflußkühler wurden 180 g eines naphthenbasischen Schmieröls (Viskosität bei 100 Grad C = 8,5 $mm^2$/s), 999,6 g Isodecylmethacrylat, 10,2 g Methacrylsäure und 10,2 g 3-Dimethylamino-2,2-dimethylpropyl-1-methacrylat vorgelegt und auf 75 Grad C erwärmt.

Durch Einleiten von $N_2$ während einer Stunde wurde entgast. Anschließend wurden 0,61 g t-Butylperpivalat und 0,61 g t-Butylperbenzoat zugegeben. Nach 4 Stunden wurde mit 840 g napthenbasischem Schmieröl verdünnt und weitere 1,5 Stunden später wurden erneut 2 g t-Butylperbenzoat zugegeben. Nach insgesamt 11 Stunden war die Polymerisation abgeschlossen.

$\eta_{sp}/c$ (Chloroform, 20 Grad C) = 97

Mw = 760 000 g/mol (nach Eichbeziehung)

Umsatz = 97 %

80 g der Polymerlösung wurden bei 150 Grad C in 1 000 g Bitumen des Typs B 200 gegeben und innerhalb einer Stunde vollständig gelöst. Das erhaltene polymermodifizierte Bitumen war homogen.

Vergleichsbeispiel 1

Herstellung eines Poly-iso-decylmethacrylates

160 g n-Decylmethacrylat und 40 g n-Octan wurden in einem 500 ml-Vierhalskolben mit Innenthermometer, Säbelrührer und Rückflußkühler vorgelegt und mittels eines Ölbades auf 85 Grad C erhitzt. Nach Erreichen dieser Temperatur wurde durch Einleiten von $N_2$ entgast, dann wurden 0,32 g t-Butylperoctoat zugegeben

Nach 2 Stunden wurde mit 28,6 g n-Octan verdünnt und nach einer weiteren Stunde wurden 0,32 g t-Butylperoctoat zugegeben. Nach 16 Stunden Gesamtpolymerisationsdauer wurde das Polymethacrylat durch Eingießen in Ethanol isoliert und anschließend getrocknet.

$\eta_{sp}/c$ = 90 ml/g

Mw (Lichtstreuung) = 710 000 g/mol

Durch Lösen von 40 g des Polymerisates in 960 g B 200 wurde wie in Beispiel 1 beschrieben ein homogenes polymermodifiziertes Bitumen erhalten.

Vergleichsbeispiel 2

Herstellung eines Polyisodecylmethacrylates

In einem 500 ml-Vierhalskolben wurden 15 g naphthenbasiches Schmieröl (Viskosität bei 100 Grad C = 11,5 mm²/s) und 85 g Isodecylmethacrylat vorgelegt und auf 82 Grad C erwärmt. Dann wurde 1/2 Stunde lang $N_2$ eingeleitet und 0,17 g t-Butylpleroctoat wurden zugegeben. Eine Mischung von 45 g naphthenbasischem Öl, 255 g Isodecylmethacrylat und 0,5 g t-Butylperoctoat wurde innerhalb von 3 Stunden mittels einer Dosierpumpe zudosiert. 20 Minuten nach Zulaufende wurde mit 280 g naphthenbasischem Öl verdünnt, nach weiteren 100 Minuten wurden erneut 0,5 g t-Butylperoctoat zugesetzt. Nach 16 Sunden war die Polymerisation beendet. Die Vikosität der Lösung betrug 4 560 mPa s bei 150 Grad C.

$\eta_{sp}/c$ (Chloroform, 20 Grad C) = 88 ml/g

Mw (Lichtstreuung) = 695 000 g/mol

80 g der Lösung des Polymethacrylats wurden durch einstündiges Rühren bei 150 Grad C in 1 000 g Bitumen B 200 gelöst.

Vergleichsbeispiel 3

Herstellung eines Polyisodecylmethacrylates

Analog Beispiel 1 wurden 222 g Isodecylmethacrylat, 3 g Methylmethacrylat und 275 g n-Octan vorgelegt, auf 85 Grad C erhitzt und durch Zugabe von $CO_2$-Eis entgast. Dann wurden 0,45 g t-Butylperoctoat zugesetzt. Nach 3 Stunden wurden erneut 0,45 g t-Butylperoctoat zugegeben. Die Gesamtpolymerisationszeit betrug 16 Stunden. Durch Eingießen in Ethanol wurde das Polymerisat isoliert und anschließend getrocknet.

$\eta_{sp}/c$ (Chloroform, 20 Grad C) = 55 ml/g

Mw (Lichtstreuung) = 340 000 g/mol

60 g des isolierten Polymethacrylats wurden durch einstündiges Rühren bei 150 Grad C in 1 000 g Bitumen B 80 gelöst.

In der anschließenden Tabelle sind die, an den nach den Beispielen 1 bis 3 und den Vergleichsbeispielen 1 bis 3 hergestellten Polymeren und PMB's sowie an den zugrundeliegenden Bitumen-Typen, erhaltenen Meßdaten zusammengestellt.

TABELLE I

| PMB- bzw. B-Typ | $\eta sp/C$ des Poly- meren | EP °C | Pene 0,1 mm | Brechpunkt °C | Duktilität (cm) | | | Elastische Rückstellung |
|---|---|---|---|---|---|---|---|---|
| | | | | | 25°C | 13°C | 7°C | |
| Beispiel 1 | 97 | 40 | 231 | -26 | | > 100 | > 100 | 67 %[1] |
| Beispiel 2 | 68 | 52 | 79 | -19 | | > 100 | | 52 %[1] |
| Beispiel 3 | 98 | 40 | 197 | -27 | | | > 100 | 70 %[1] |
| Vergleichs- beispiel 1 | 90 | 43 | 132 | -29 | | | > 100 | 25 %[1] |
| Vergleichs- beispiel 2 | 88 | 47 | 105 | -27 | | | > 100 | 34 %[1] |
| Vergleichs- beispiel 3 | 55 | 51 | 74 | -17 | | | > 100 | 11 %[1] |
| B 200 | | 39 | 190 | -18 | > 100 | | | 0 %[2] |
| B 80 | | 49 | 88 | -16 | > 100 | | | 1 %[1] |

EP = Erweichungspunkt, Ring und Kugel, DIN 52011
Pene = Nadelpenetration, DIN 52010

Brechpunkt nach Fraas, DIN 52010
Duktilität, DIN 52013

Elastische Rückstellung: 1) modif. DIN 52013

2) Methode der Torsionsrückverformung nach Esser, Straßen- und Tiefbau, Heft 4, 1962, S. 342
bzw. Thompson, Hagman, Proc. AAPT 27 (1958) S. 494

**Patentansprüche**

1. Polymermodifiziertes Bitumen mit verbesserter elastischer Rückstellung durch einen Zusatz von 0,5 bis 20 Gew.-% an Polymerbestandteilen, wobei diese Polymerbestandteile mindestens zu 20 Gew.-% Alkyl-(meth)acrylateinheiten enthaltende Copolymere mit Molekulargewichten Mw über 30 000 sind,
   dadurch gekennzeichnet,
   daß das zuzusetzende Copolymer in Anteilen von 50 bis 99,8 Gew.-% aus $C_8$- bis $C_{26}$-Alkyl(meth)acrylaten, in Anteilen von 0,1 bis 2,8 Gew.-% aus polymerisierbaren Carbonsäuren, in Anteilen von 0,1 bis 2,8 Gew.-% aus polymerisierbaren basischen Stickstoffverbindungen und in Anteilen von 0 bis 49,8 Gew.-% aus einer oder mehrerer anderer polymerisierbarer Verbindungen mit nicht mehr als einer polymerisierbaren Doppelbindung aufgebaut ist.

2. Polymermodifiziertes Bitumen nach Anspruch 1, dadurch gekennzeichnet, daß das Copolymer in Anteilen von 50 bis 99,8 Gew.-% aus $C_8$- bis $C_{18}$-Alkyl(meth)acrylaten aufgebaut ist.

3. Polymermodifiziertes Bitumen nach den Ansprüchen 1 und 2, dadurch gekennzeichnet, daß das Copolymer in Anteilen von 0,2 bis 2,5, vorzugsweise 0,5 bis 2,0 Gew.-% polymerisierbarer Carbonsäuren und mit Anteilen von 0,2 bis 2,5, vorzugsweise 0,5 bis 2,0 Gew.-% polymerisierbarer basischer Stickstoffverbindungen aufgebaut ist.

4. Polymermodifiziertes Bitumen nach den Ansprüchen 1 bis 3, dadurch gekennzeichnet, daß der Copolymerzusatz ausschließlich aus Alkyl(meth)acrylatcopolymerisaten besteht.

5. Polymermodifiziertes Bitumen nach den Ansprüchen 1 bis 4, dadurch gekennzeichnet, daß das Copolymer ein Copolymerisat aus Alkyl(meth)acrylaten, polymerisierbaren Carbonsäuren und polymerisierbaren basischen Stickstoffverbindungen ist.

6. Polymermodifiziertes Bitumen nach den Ansprüchen 1 bis 4, dadurch gekennzeichnet, daß das Copolymer ein Gemisch von Copolymerisaten aus Alkyl(meth)acrylaten und polymerisierbaren Carbonsäuren und/oder polymerisierbaren basischen Stickstoff verbindungen ist.


**Claims**

1. Polymer-modified bitumen with improved elastic recovery as a result of an addition of 0.5 to 20 wt.% of polymer components, said polymer components being copolymers containing at least 20 wt.% of alkyl (meth)acrylate units having molecular weights Mw above 30,000, characterised in that the copolymer to be added is synthesised from 50 to 99.8 wt.% of $C_8$- to $C_{26}$-alkyl (meth)acrylates, from 0.1 to 2.8 wt.% of polymerisable carbonic acids, from 0.1 to 2.8 wt.% of polymerisable basic nitrogen compounds, and from 0 to 49.8 wt.% of one or more other polymerisable compounds having not more than one polymerisable double bond.

2. Polymer-modified bitumen according to claim 1, characterised in that the copolymer is synthesised from 50 to 99.8 wt.% of $C_8$- to $C_{18}$-alkyl(meth)acrylates.

3. Polymer-modified bitumen according to claims 1 and 2, characterised in that the copolymer is synthesised from 0.2 to 2.5, preferably 0.5 to 2.0 wt.%, of polymerisable carbonic acids and from 0.2 to 2.5, preferably 0.5 to 2.0 wt.% of polymerisable basic nitrogen compounds.

4. Polymer-modified bitumen according to claims 1 to 3, characterised in that the copolymer addition consists exclusively of alkyl(meth)acrylate copolymers.

5. Polymer-modified bitumen according to claims 1 to 4, characterised in that the copolymer is a copolymer of alkyl(meth)acrylates, polymerisable carbonic acids and polymerisable basic nitrogen compounds.

6. Polymer-modified bitumen according to claims 1 to 4, characterised in that the copolymer is a mixture of copolymers of alkyl(meth)acrylates and polymerisable carbonic acids and/or polymerisable basic nitrogen compounds.

**Revendications**

1.  Bitume modifié par un polymère, dont la mémoire élastique est améliorée par une addition de 0,5 à 20% en poids de composants polymères, ces composants polymères étant constitués, pour 20% en poids au moins, de copolymères contenant des motifs (méth)acrylate d'alkyle et ayant des poids moléculaires Mw supérieurs à 30 000, caractérisé en ce que le copolymère à ajouter est composé, dans les proportions de 50 à 99,8% en poids, de (méth)acrylates d'alkyle en $C_8$-$C_{26}$, dans des proportions de 0,1 à 2,8% en poids, d'acides carboxyliques polymérisables, dans des proportions de 0,1 à 2,8% en poids, de composés azotés basiques polymérisables et, dans des proportions de 0 à 49,8% en poids, d'un ou de plusieurs autres composés polymérisables ne comportant pas plus d'une double liaison polymérisable.

2.  Bitume modifié par un polymère selon la revendication 1, caractérisé en ce que le copolymère est composé de (méth)acrylates d'alkyle en $C_8$-$C_{18}$ dans des proportions de 50 à 99,8% en poids.

3.  Bitume modifié par un polymère selon la revendication 1 ou 2, caractérisé en ce que le copolymère est composé, dans des proportions de 0,2 à 2,5, de préférence de 0,5 à 2,0% en poids, d'acides carboxyliques polymérisables et, dans des proportions de 0,2 à 2,5, de préférence de 0,5 à 2,0% en poids, de composés azotés basiques polymérisables.

4.  Bitume modifié par un polymère selon l'une quelconque des revendications 1 à 3, caractérisé en ce que l'addition de copolymère se compose exclusivement de copolymères de (méth)acrylate d'alkyle.

5.  Bitume modifié par un polymère selon l'une quelconque des revendications 1 à 4, caractérisé en ce que le copolymère est un produit de copolymérisation de (méth)acrylates d'alkyle, d'acides carboxyliques polymérisables et de composés azotés basiques polymérisables.

6.  Bitume modifié par un polymère selon l'une quelconque des revendications 1 à 4, caractérisé en ce que le copolymère est un mélange de produits de copolymérisation de (méth)acrylates d'alkyle et d'acides carboxyliques polymérisables et/ou de composés azotés basiques polymérisables.